# EUROPÄISCHE PATENTSCHRIFT

(11) **EP 3 177 228 B1**
(45) Veröffentlichungstag und Bekanntmachung des Hinweises auf die Patenterteilung: **31.10.2018**
(21) Anmeldenummer: 15738836.4
(22) Anmeldetag: 10.07.2015
(51) Int. Cl.: A61C 15/02, A46B 9/00, A46B 3/04, A46B 3/00, A46B 1/00

(54) **INTERDENTALREINIGER UND VERFAHREN ZU SEINER HERSTELLUNG**
INTERDENTAL CLEANER AND METHOD FOR PRODUCING SAME
APPAREIL DE NETTOYAGE INTERDENTAIRE ET SON PROCÉDÉ DE FABRICATION

(30) Priorität: 06.08.2014 DE 102014011405
(43) Veröffentlichungstag der Anmeldung: 14.06.2017
(73) Patentinhaber: Sunstar Suisse, S.A., 1163 Etoy (CH)
(72) Erfinder: BUTZ, Jürgen, 79677 Schönau (DE)
(74) Vertreter: Lichti - Patentanwälte Partnerschaft mbB
(86) Internationale Anmeldenummer: PCT/EP2015/001415
(87) Internationale Veröffentlichungsnummer: WO 2016/020029

(56) Entgegenhaltungen:
- WO-A1-2014/023395
- WO-A1-2014/023424
- JP-A- 2003 245 287
- US-A- 5 044 041
- US-A1- 2014 008 837

## Beschreibung

Die Erfindung betrifft einen Interdentalreiniger gemäß dem Oberbegriff des Anspruchs 1.

Ferner betrifft die Erfindung ein Verfahren zur Herstellung eines entsprechenden Interdentalreinigers.

Neben aus Holz oder Metalldraht bestehenden Interdentalreinigern früherer Zeiten sind heutzutage aus Kunststoff bestehende Interdentalreiniger bekannt, wie sie in der EP 0 932 371 gezeigt und beschrieben sind. Ein derartiger Interdentalreiniger besitzt einen stabförmigen Träger aus einem relativ harten und formstabilen Kunststoff, der im vorderen Bereich seiner axialen Länge mit einem aus einem weichen Kunststoff, beispielsweise einem thermoplastischen Elastomer bestehenden, hülsenförmigen Überzug versehen ist. Der Überzug kann auf seiner radial äußeren Seite eine Strukturierung in Form von Noppen und/oder sich radial nach außen erstreckenden Fingern aufweisen, um die Reinigungswirkung zu erhöhen.

Der Benutzer kann den Interdentalreiniger an einem Griffabschnitt des stabförmigen Trägers ergreifen und den stabförmigen Träger mit dem die Strukturierung tragenden Überzug in einen Zahnzwischenraum einführen und dort hin und her bewegen, wodurch der Zahnzwischenraum gereinigt wird und eventuell anhaftende Partikel gelöst werden.

Aufgrund der die Strukturierung bildenden, radial hervor-stehenden Finger wird die Reinigungswirkung des Interdentalreinigers im Wesentlichen durch die Finger bestimmt, die mit den zu reinigenden Zahnzwischenräumen über eine relativ kleine Fläche in Kontakt treten, so dass mehrere kleinflächige, lokale Reinigungszonen, jedoch keine großflächige Reinigung erreicht ist. Zur Erzielung einer großflächigen Reinigung ist es bei einem Interdentalreiniger gemäß der US 5,044,041 versucht worden, ein flächiges, netzartiges Gewebeteil an einem stabförmigen Träger durch thermisches Verkleben anzubringen. Das Gewebeteil ist von einem Flächengebilde aus zwei sich orthogonal kreuzenden Fadensystemen, sogenannten Kettfäden und Schussfäden, gebildet, das in eine Spritzgussform eingelegt wird und an den der stabförmige Träger angespritzt wird. Gemäß der US 2014/0008837 A1, von der im Oberbegriff des Anspruchs 1 ausgegangen wird, ist ein entsprechendes Gewebeteil in den stabförmigen Träger eingebettet und durchdringt diesen.

In der Praxis hat sich gezeigt, dass bei Verwendung des Interdentalreinigers die Gefahr besteht, dass sich einzelne Fäden aus dem Gewebeteil im Mund des Benutzers lösen, was für den Benutzer sehr unangenehm ist und womit die Gefahr besteht, dass der Benutzer die gelösten Fäden verschluckt.

Der Erfindung liegt die Aufgabe zugrunde, einen Interdentalreiniger mit einem Gewebeteil zu schaffen, bei dem die Gefahr des Lösens von Fäden wesentlich verringert ist.

Ferner soll ein Verfahren geschaffen werden, mit dem sich ein entsprechender Interdentalreiniger in einfacher Weise herstellen lässt.

Diese Aufgabe wird erfindungsgemäß durch einen Interdental-reiniger mit den Merkmalen des Anspruchs 1 gelöst. Dabei ist vorgesehen, dass die Fadensysteme, d.h. einerseits die Kettfäden und andererseits die Schussfäden unter einem Winkel im Bereich von 20° bis 70° und vorzugsweise unter einem Winkel von 40° ± 10° zur Längsachse des stabförmigen Trägers verlaufen und den stabförmigen Träger durchdringen. Da die Fadensysteme bei dem erfindungsgemäßen Interdental-reiniger durch den stabförmigen Träger hindurch verlaufen und nicht nur oberflächlich mit diesem verklebt sind, sind die die Fadensysteme bildenden Fäden sicher am Träger gehalten, so dass sie sich bei Gebrauch des Interdentalreinigers von diesem nicht lösen können. Aufgrund der Anordnung der Fadensysteme bzw. der die Fadensysteme bildenden Fäden unter einem Winkel und somit schrägt zur Längsachse des stabförmigen Trägers ist erreicht, dass annähernd alle Fäden der Fadensysteme durch den Träger hindurch verlaufen und in diesem gehalten sind. Parallel zur Längsachse des Trägers verlaufende Fäden kommen bei dem erfindungsgemäßen Interdentalreiniger nicht vor, da diese sehr stark zum Lösen neigen.

Gewebe im Sinne der Erfindung sind alle insbesondere textilen Flächgebilde aus mindestens zwei sich kreuzenden Fadensystemen, die üblicherweise als Kettfäden und Schuss-fäden bezeichnet werden. Die Kettfäden und Schussfäden können sich beispielsweise senkrecht zueinander erstrecken und miteinander verbunden und/oder miteinander verflochten sein. Wenn die einzelnen Fäden eines Fadensystems einen relativ großen gegenseitigen Abstand voneinander aufweisen, bildet das Gewebe eine Netzstrukur, die erfindungsgemäß ebenfalls mit umfasst sein soll.

Der in diesem Text verwendete Begriff "axial" bezieht sich auf die Längsachse des stabförmigen Trägers und gegebenenfalls auch auf die Längsachse eines Überzuges. Der Begriff "radial" bezieht sich dementsprechend auf eine senkrecht zur axialen Längsrichtung verlaufende Richtung.

Im bevorzugter Ausgestaltung der Erfindung ist vorgesehen, dass das Gewebeteil den Träger radial und vorzugsweise mittig durchdringt und auf entgegengesetzten Seiten aus diesem hervorsteht.

Das Gewebeteil kann mit Abstand vor dem vorderen axialen Ende des stabförmigen Trägers enden oder sich exakt bis zu dem vorderen Ende erstrecken. Eine erhöhte Reinigungswirkung lässt sich erzielen, wenn in Weiterbildung der Erfindung vorgesehen ist, dass das Gewebeteil den stabförmigen Träger an dessen vorderem Ende axial überragt.

Zusätzlich zu dem Gewebeteil kann die Reinigungseinrichtung einen aus einem weich-elastischen Kunststoff bestehenden Überzug des Trägers umfassen, auf dessen Außenseite eine Strukturierung ausgebildet ist. Bei der Strukturierung kann es sich in bekannter Weise um mehrere mit radialer Komponente vom Überzug hervorstehende Finger und/oder Lippen handeln, die aus dem gleichen Material wie der Überzug bestehen und einstückig mit diesem verbunden sind.

Dabei kann das Gewebeteil neben dem Träger auch den Überzug durchdringen.

In Weiterbildung der Erfindung kann vorgesehen sein, dass das Gewebeteil über die Finger radial hervorsteht, d.h. eine größere freie radiale Kraglänge als die Finger be-sitzt. Auf diese Weise ist sichergestellt, dass das Gewebe--teil beim Einführen in einen Zahnzwischenraum mit den zu reinigenden Oberflächen in Kontakt kommt und nicht durch die Finger abgeschirmt wird.

In einer möglichen Ausgestaltung der Erfindung ist vorgesehen, dass der Interdentalreiniger ein einziges Gewebeteil besitzt, das vorzugsweise auf zwei entgegengesetzten Seiten aus dem Träger radial hervorsteht. Es können jedoch auch mehrere Gewebeteile vorgesehen sein, die vorzugsweise parallel zueinander verlaufen und insbesondere übereinander liegen. Die Gewebeteile können alle den gleichen grundsätzlichen Aufbau aufweisen, vorzugsweise ist jedoch vorgesehen, dass die Gewebeteile eine unterschiedliche Struktur und/oder eine unterschiedliche Stärke und/oder eine unterschiedliche Fadenorientierung und/oder eine unterschiedliche Maschenweite aufweisen. Durch Wahl ge-eigneter Gewebeteile können somit Interdentalreiniger unterschiedlicher Funktionalität und Reinigungswirkung in einfacher Weise hergestellt werden.

Die Reinigungseinrichtung kann in Weiterbildung der Erfindung zusätzlich einen Borstensatz aus mehreren mit radialer Komponente vom Träger hervorstehenden Borsten-bündeln und/oder Einzelborsten aufweisen. Borsten im Sinne der Erfindung sind dünne vorgefertigte Abschnitte eines aus Kunststoff bestehenden Monofilamentes oder Multifilamentes, wobei die Borsten einen maximalen Durchmesser von 0,25mm aufweisen und als Einzelborsten und/oder als Borstenbündel verwendet werden können. Die Borsten sind in den Träger und/oder den Überzug eingebettet und dadurch sicher gehalten.

Wenn die Reinigungseinrichtung neben dem Gewebeteil sowohl einen weich-elastischen Überzug mit Fingern und/oder Lappen als auch sich radial erstreckende Borsten oder Borstenbündel aufweist, sind unterschiedliche Reinigungseigenschaften in einem einzigen Interdentalreiniger kombiniert, wodurch eine sehr wirkungsvolle Reinigung der Zahnzwischenräume möglich ist.

In Weiterbildung der Erfindung kann vorgesehen sein, dass die radial vom Träger hervorstehenden Abschnitte des Gewebeteils zumindest abschnittsweise gespleißt sind, wodurch eine feine Spaltung der Gewebestruktur erreicht und die Gewebestruktur in diesen Bereich aufgehoben ist und eine Vielzahl von radial hervorstehenden, unregelmäßigen Einzelfäden gebildet sind.

Durch die Spleißung der hervorstehenden Abschnitte des Gewebeteils kann eine Änderung und Anpassung der Reinigungseigenschaften erreicht werden.

Hinsichtlich des Verfahrens wird die oben genannte Aufgabe durch ein Verfahren mit den Merkmalen des Anspruchs 15 gelöst. Dabei wird zumindest ein Gewebeteil, das sich kreuzende Fadensysteme mit Kettfäden und Schussfäden auf-weist, in einem Spritzgusswerkzeug unter Bildung eines stabförmigen Trägers so mit Kunststoff umspritzt, dass das Gewebeteil den stabförmigen Träger durchdringt und radial von diesem hervorsteht, wobei die Fadensysteme, d.h. einerseits die Kettfäden und andererseits die Schussfäden unter einem Winkel von 20° und 70° und insbesondere unter einem Winkel von 45° ± 10° zur Längsachse des stabförmigen Trägers angeordnet werden.

Vorzugsweise wird das Gewebeteil so angeordnet, dass es den Träger radial vorzugsweise mittig durchdringt und auf entgegengesetzten Seiten aus diesem hervorsteht.

In Weiterbildung der Erfindung kann vorgesehen sein, dass das Gewebeteil so angeordnet wird, dass es den stabförmigen Träger an dessen vorderem Ende axial überragt.

Das Spritzgusswerkzeug besitzt in üblicher Ausgestaltung zumindest zwei Formhälften, die relativ zueinander verstellt werden können, so dass das Spritzgusswerkzeug geöffnet und geschlossen werden kann. Vor dem Schließen des Spritzgusswerkzeugs wird das Gewebeteil zwischen den Formhälften angeordnet. Dabei kann vorgesehen sein, dass das Gewebeteil in einer in zumindest einer der Formhälften des Spritzgusswerkzeugs ausgebildeten Aussparung angeordnet wird. Vorzugsweise wird das Gewebeteil unter enger Passung in der Aussparung angeordnet, so dass es bei geschlossenem Spritzgusswerkzeug gegen ein seitliches Verschieben in seiner Flächenebene gesichert ist.

Es kann vorgesehen sein, dass in nur einer Formhälfte des Spritzgusswerkzeugs eine entsprechende Aussparung in der der anderen Formhälfte zugewandten Oberfläche ausgebildet ist. Alternativ ist es jedoch auch möglich, dass in beiden Formhälften auf den einander zugewandten Oberflächen jeweils eine entsprechende Aussparung ausgebildet ist und dass das Gewebeteil bei geschlossenem Spritzgusswerkzeug in beiden Aussparungen liegt.

Der Vorteil der Anordnung des Gewebes in einer oder sogar in zwei Aussparungen liegt insbesondere darin, dass die Schließkraft des Spritzgusswerkzeugs nicht dazu führt, dass das Gewebe durch die Formhälften zerquetscht wird und andererseits ist es möglich, dass die Formhälften bei geschlossenem Spritzgusswerkzeug relativ zueinander dicht abschließen.

Wenn die Tiefe der Aussparung bzw. die Summe der Tiefen der Aussparungen normal zur Flächenebene des Gewebeteils größer als die Dicke des Gewebeteils ist, wird das Gewebeteil bei geschlossenem Spritzgusswerkzeug durch die Formhälften nicht mit einer Druckkraft beaufschlagt und bleibt unverformt.

In bevorzugter Ausgestaltung der Erfindung kann jedoch vorgesehen sein, dass das Gewebeteil bei geschlossenem Spritzgusswerkzeug unter elastischer Verformung und somit unter einer Vorspannung normal zur Flächenebene gehalten ist. Dies lässt sich beispielsweise dadurch erreichen, dass die Tiefe der Aussparung bzw. die Summe der Tiefen der Aussparungen geringer als die entsprechende Dicke des Gewebeteils ist, so dass die Formhälften beim Schließen des Spritzgusswerkzeugs das Gewebeteil zwischen sich einklemmen und unter Vorspannung halten.

Vorzugsweise sind die Dimensionen der Aussparung bzw. der Aussparungen so gewählt, dass die Tiefe der Aussparung bzw. die Summe der Tiefen der Aussparungen 70% bis 90% der Gewebedicke und insbesondere 75% bis 85% der Gewebedicke entsprechen.

In Weiterbildung kann vorgesehen sein, dass der stabförmige Träger mit einem aus einem weich-elastischem Kunststoff bestehenden Überzug versehen wird, wobei auf der Außenseite des Überzugs eine Strukturierung ausgebildet wird. Die Strukturierung kann in oben genannter Weise durch angeformte Finger und/oder Lippen gebildet sein. Dabei wird das Gewebeteil vorzugsweise so angeordnet, dass es auch den Überzug vorzugsweise mittig durchdringt.

Darüber hinaus kann der stabförmige Träger mit einem Borstensatz mit mehreren mit radialer Komponente vom Träger hervorstehenden Borstenbündeln und/oder Einzelborsten versehen werden. Die Borstenbündel und/oder Einzelborsten können so angeordnet werden, dass sie den Träger radial durchdringen und auf entgegengesetzten Seiten aus diesem hervorstehen.

In bevorzugter Ausgestaltung des Verfahrens kann vorgesehen sein, dass der Träger zumindest in einem Teil seines das Gewebeteil aufweisenden Abschnittes um seine Längsachse tordiert wird. Falls der Träger mit dem Überzug versehen ist, wird dieser zumindest abschnittsweise ebenfalls tordiert. Aufgrund der Tordierung des Trägers und gegebenenfalls des Überzuges werden die radial hervorstehenden Abschnitte des Gewebeteils und gegebenenfalls die Finger des Überzuges über den Umfang des Interdentalreinigers verteilt und darüber hinaus wird die Steifigkeit des Interdentalreinigers durch die Tordierung bzw. die damit verbundene bleibende Torsionsverformung des Interdentalreinigers verändert und kann durch das Maß der Tordierung in gewünschter Weise eingestellt werden.

Die vom Träger bzw. vom Überzug hervorstehenden Abschnitte des Gewebeteils können ihre Gewebe- oder Netzstrukur behalten, wodurch sie eine hohe Stabilität besitzen. Es kann jedoch auch vorgesehen sein, dass die radial vom Träger hervorstehenden Abschnitte des Gewebeteils zumindest abschnittsweise gespleißt, d.h. fein gespalten werden, so dass die radial vom Träger hervorstehenden Abschnitte des Gewebeteils eine unregelmäßige Struktur aus feinen Fäden besitzt. Vorzugsweise wird das Spleißen dadurch erreicht, dass die entsprechenden Abschnitte des Gewebeteils mit einem Messer, einem Rechen oder einem Schlagwerkzeug aufgetrennt werden.

Weitere Einzelheiten der Erfindung sind aus der folgenden Beschreibung von Ausführungsbeispielen unter Bezugnahme auf die Zeichnung ersichtlich. Es zeigen:
- Fig. 1: eine perspektivische Darstellung eines erfindungsgemäßen Interdentalreinigers,
- Fig. 2: eine perspektivische Darstellung eines geöffneten Spritzgusswerkzeugs,
- Fig. 3: das Spritzgusswerkzeug gemäß Fig. 2 nach Einlegen eines Gewebeteils,
- Fig. 4: das Spritzgusswerkzeug gemäß Fig. 3 nach dem Schließen des Werkzeugs,
- Fig. 5: einen im Spritzgusswerkzeug hergestellten Interdentalreiniger vor Beschneiden des Gewebeteils,
- Fig. 6: den Interdentalreiniger gemäß Fig. 5 nach Beschneiden des Gewebeteils,
- Fig. 7: eine alternative Ausgestaltung des Spritzgusswerkzeugs in geöffnetem Zustand mit eingelegtem Gewebeteil,
- Fig. 8: eine weitere alternative Ausgestaltung des Spritzgusswerkzeugs in geöffnetem Zustand ohne Gewebeteil,
- Fig. 9: das Spritzgusswerkzeug gemäß Fig. 8 mit eingelegtem Gewebeteil,
- Fig. 10: eine schematische Darstellung der Dimensionierung des Spritzgusswerkzeugs gemäß Fig. 8,
- Fig. 11: den Interdentalreiniger gemäß Fig. 5 nach Einlegen in eine weiteres Spritzgusswerkzeug,
- Fig. 12: das Spritzgusswerkzeug gemäß Fig. 11 in geschlossenem Zustand nach Herstellung eines Überzugs,
- Fig. 13: einen im Spritzgusswerkzeug gemäß Fig. 11 hergestellten Interdentalreiniger vor dem Beschneiden des Gewebeteils,
- Fig. 14: den Interdentalreiniger gemäß Fig. 13 nach Beschneiden des Gewebeteils,
- Fig. 15: das vordere Ende mehrerer gleichzeitig hergestellter Interdentalreiniger mit einem gemeinsamen Gewebeteil vor dem Beschneiden,
- Fig. 16: die Interdentalreiniger gemäß Fig. 15 nach dem Beschneiden,
- Fig. 17: die Interdentalreiniger gemäß Fig. 16 beim Spleißen,
- Fig. 18: die Tordierung eines Interdentalreinigers,
- Fig. 19: eine Abwandlung des Verfahrens mit zwei Gewebeteilen,
- Fig. 20: eine weitere Abwandlung des Verfahrens mit einem Gewebeteil und einem Borstenbesatz und
- Fig. 21: das vordere Ende eines Interdentalreinigers gemäß einer weiteren Ausführungsform.

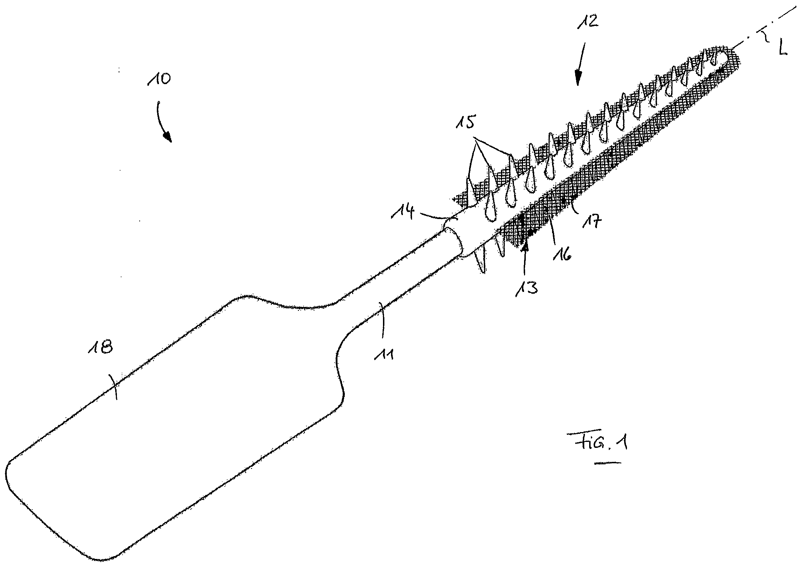

Fig. 1 zeig eines perspektivische Darstellung eines erfindungsgemäßen Interdentalreinigers 10, der einen stabförmigen Träger 11 aufweist. Der Träger 11 besitzt eine axiale Längsachse L und besteht vorzugsweise aus einem harten bzw. formstabilen ersten Kunststoffmaterial. Der Träger 11 besitzt in seinem gemäß Fig. 1 rechten Endbereich eine Reinigungseinrichtung 12 und am gegenüberliegenden, gemäß Fig. 1 linken Ende ein Griffteil 18, an dem ein Be-nutzer den Interdentalreiniger 10 erfassen kann.

Die Reinigungseinrichtung 12 umfasst einen hülsenartigen Überzug 14, aus einem weichen zweiten Kunststoffmaterial, insbesondere einem thermoplastischen Elastomer, wobei der Überzug 14 auf seiner Außenseite radial nach außen hervorstehende, einstückige angeformte Finger 15 trägt. Des Weiteren ist in den Träger 11 und den Überzug 14 ein Gewebeteil 13 eingebettet, das beim dargestellten Ausführungsbeispiel in einer Längs-Mittelebene des Trägers 11 und des Überzugs 14 liegt, diese beiden Bauteile durchdringt und auf entgegengesetzten Seiten radial nach außen hervorsteht. Auf diese Weise sind zwei auf entgegengesetzten Seiten angeordnete, in axialer Längsrichtung des Interdentalreinigers 10 verlaufende, vom Gewebeteil 13 gebildete flügelartige Ansätze gebildet. Am vorderen axialen, gemäß Fig. 1 rechten Ende des Interdentalreinigers 10 überragt das Gewebeteil 13 den Träger 11 und den Überzug 14.

Das Gewebeteil 13 ist ein Flächengebilde mit netzartiger Struktur, das aus zwei sich kreuzenden Fadensystemen gebildet ist. Ein erstes Fadensystem ist von einer Vielzahl auf Abstand parallel nebeneinander angeordneter Kettfäden 16 gebildet, während ein zweites Fadensystem von einer Vielzahl auf Abstand nebeneinander angeordneten Schussfäden 17 gebildet ist, die zumindest annähernd senkrecht zu den Kettfäden 16 verlaufen. Die Kettfäden 16 und die Schussfäden 17 können an ihren Kreuzungspunkten miteinander verbunden und/oder miteinander verwebt sein.

Aus Fig. 1 ist ersichtlich, dass sowohl die Kettfäden 16 als auch die Schussfäden 17 unter einem Winkel von ca. 45° geneigt zur Längsachse L des stabförmigen Trägers 11 verlaufen, so dass fast alle Fäden in den Träger 11 und/oder den Überzug 14 eingebettet und in diesem gehalten sind.

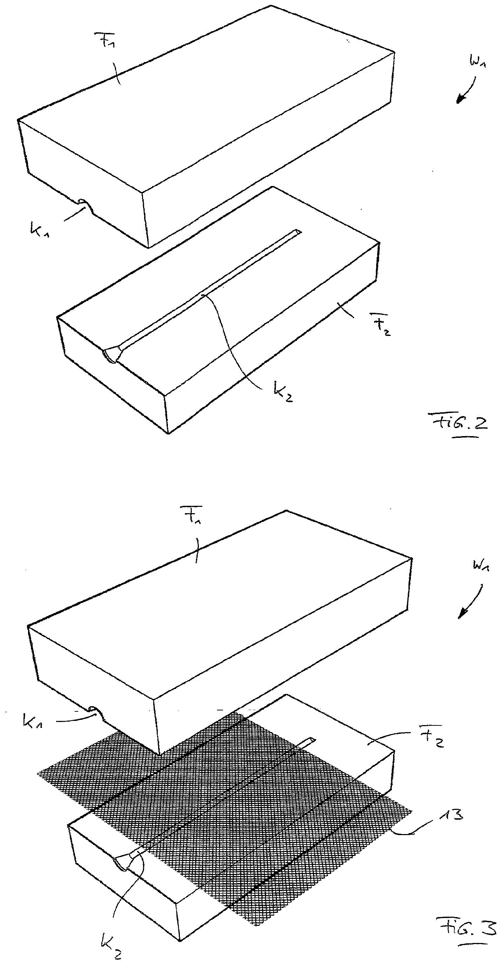

Fig. 2 zeigt eine schematische perspektivische Darstellung eines geöffneten ersten Spritzgusswerkzeuges W₁ mit einer oberen Formhälfte F₁, die eine obere Kavität K₁ besitzt, und einer unteren Formhälfte F₂, die eine untere Kavität K₂ aufweist.

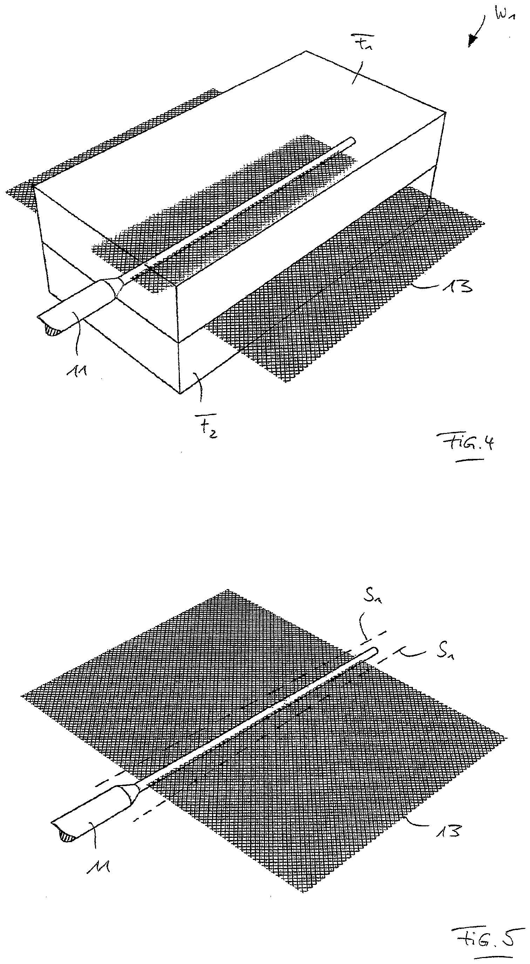

Gemäß Fig. 3 wird in die Trennebene zwischen den Formhälften F₁ und F₂ bzw. zwischen den Kavitäten K₁ und K₂ ein Gewebeteil 13 eingelegt, wobei die Fäden der das Gewebeteil 13 bildenden Fadensysteme unter einem Winkel von ca. 45° zur Längsachse der den Träger 11 bildenden Kavitäten K₁, K₂ ausgerichtet werden. Anschließend wird das erste Spritzgusswerkzeug W₁ geschlossen, indem die Formhälften F₁ und F₂ aufeinandergelegt werden. Nach dem Schließen des ersten Spritzgusswerkzeugs W₁ wird in den von den Kavitäten K₁ und K₂ gebildeten Formhohlraum ein flüssiger Kunststoff eingespritzt, der den stabförmigen Träger 11 bildet, wobei das Gewebeteil 13 den Träger 11 durchdringt und radial von diesem hervorsteht, wie es in Fig. 4 gezeigt ist. Vorzugsweise liegt das Gewebeteil 13 in der horizontalen Längs-Mittelebene des stabförmigen Trägers 11.

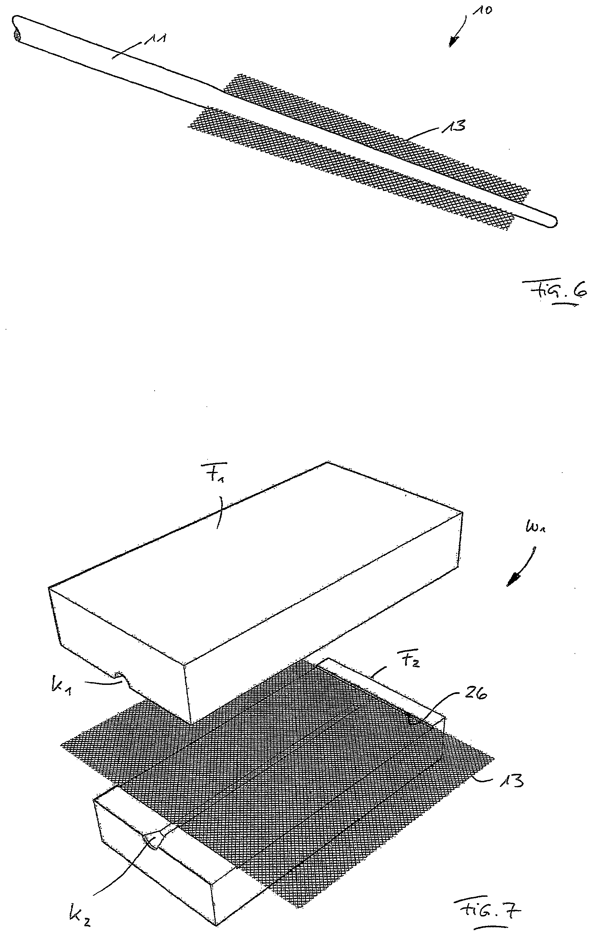

Nach Öffnen des ersten Spritzgusswerkzeugs W₁ ist ein Rohling eines Interdentalreinigers gebildet, wie er in Fig. 5 dargestellt ist. Dieser umfasst den stabförmigen Träger 11 mit dem eingebetteten Gewebeteil 13, das jedoch für die praktische Anwendung noch viel zu groß ist. Es ist möglich, den in Fig. 5 dargestellten Interdentalreiniger mit einer weiteren Kunststoffkomponente zu versehen oder darauf zu verzichten und diesen nachzubearbeiten, indem die radial hervorstehenden Abschnitte des Gewebeteils 13 längs der in Fig. 5 angedeuteten Schnittlinien S₁ mit Abstand zum Träger 11 und im Wesentlichen parallel zu diesem beschnitten werden. Es ergibt sich dann ein Interdentalreiniger 10, wie er in Fig. 6 abschnittsweise dargestellt ist.

Fig. 7 zeigt eine Fig. 3 entsprechende Darstellung eines abgewandelten Spritzgusswerkzeugs W₁, wobei gleiche oder gleichartige Bauteile mit den gleichen Bezugszeichen versehen sind. Das Spritzgusswerkzeug W₁ unterscheidet sich von dem Spritzgusswerkzeug gemäß Fig. 3 dadurch, dass in der unteren Formhälfte F₂ auf deren der anderen Formhälfte F₁ zugewandten Oberseite eine großflächige Aussparung 26 ausgebildet ist, in die das Gewebeteil unter enger Passung so eingelegt ist, dass es in Axialrichtung der Kavität K₂ sicher positioniert und fixiert ist. Auf diese Weise ist vermieden, dass sich das Gewebeteil beim Schließen des Spritzgusswerkzeugs W₁ relativ zu der unteren Formhälfte F₂ verschiebt.

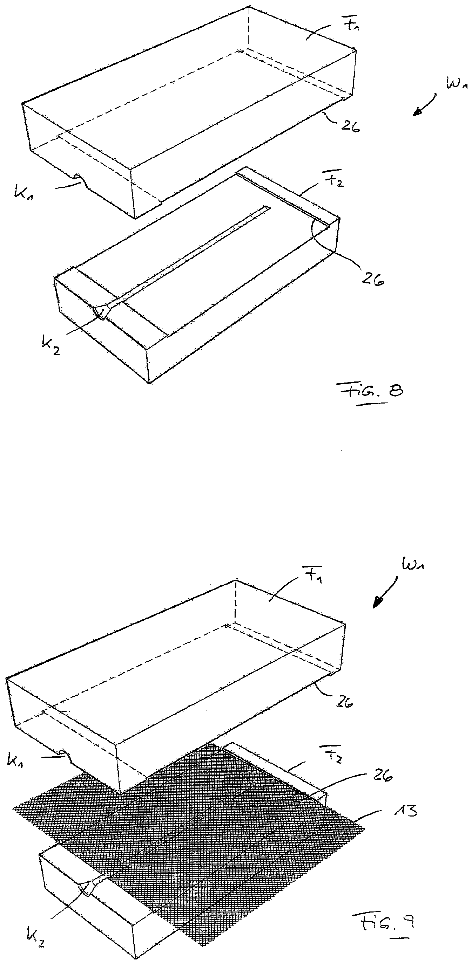

Während bei der Ausgestaltung gemäß Fig. 7 die Aussparung 26 nur in der unteren Formhälfte F₂ ausgebildet ist, zeigen die Fig. 8 und 9 eine Ausgestaltung, bei der in beiden Formhälften F₁ und F₂ auf den einander zugewandten Oberflächen jeweils eine Aussparung 26 ausgebildet ist, wobei das Gewebeteil 13 bei geschlossenem Spritzgusswerkzeug W₁ in beiden Aussparungen 26 angeordnet ist und aufgenommen wird.

Die Aussparung 26 bzw. die Aussparungen 26 verhindern, dass die Schließkraft des Spritzgusswerkzeugs W₁ bzw. der Formhälften F₁, F₂ zu der Einwirkung einer übermäßigen Druckkraft auf das Gewebeteil 13 führt, wodurch dieses zerquetscht werden könnte.

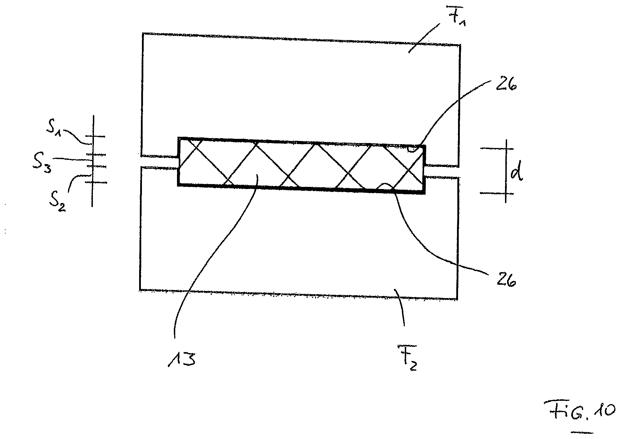

Vorzugsweise ist die Tiefe der Aussparung 26 gemäß Fig. 7 bzw. die Summe der Tiefen der Aussparungen 26 gemäß den Fig. 8 und 9 so bemessen, dass sie geringer als die Dicke des Gewebeteils 13 sind, so dass das Gewebeteil 13 bei geschlossenem Spritzgusswerkzeug W₁ zwischen den Formhälften F₁ und F₂ eingespannt und unter elastischer Verformung gehalten ist. Fig. 10 zeigt in schematischer Darstellung eine mögliche Dimensionierung der Aussparungen 26 des Spritzgusswerkzeugs W₁. Dabei wird davon ausgegangen, dass das Gewebeteil eine Dicke d normal zu seiner Erstreckungs-ebene besitzt und dass die Aussparungen 26 in den beiden Formhälften F₁ und F₂ eine entsprechende Tiefe von s₁ und s₂ besitzen. Dabei ist vorgesehen, dass die Summe der Tiefen s₁ und s₂ der Aussparungen 26 um einen Wert s₃ kleiner als die Dicke d des Gewebeteils 13 ist. Vorzugsweise liegt der Wert für die Differenz s₃ im Bereich von 10% bis 30% der Dicke d des Gewebeteils (0,1 d ≤ s₃ ≤ 0,3 d). Insbesondere liegt der Wert zwischen 15% und 25% der Dicke d des Gewebeteils (0,15 d ≤ s₃ ≤ 0,25 d).

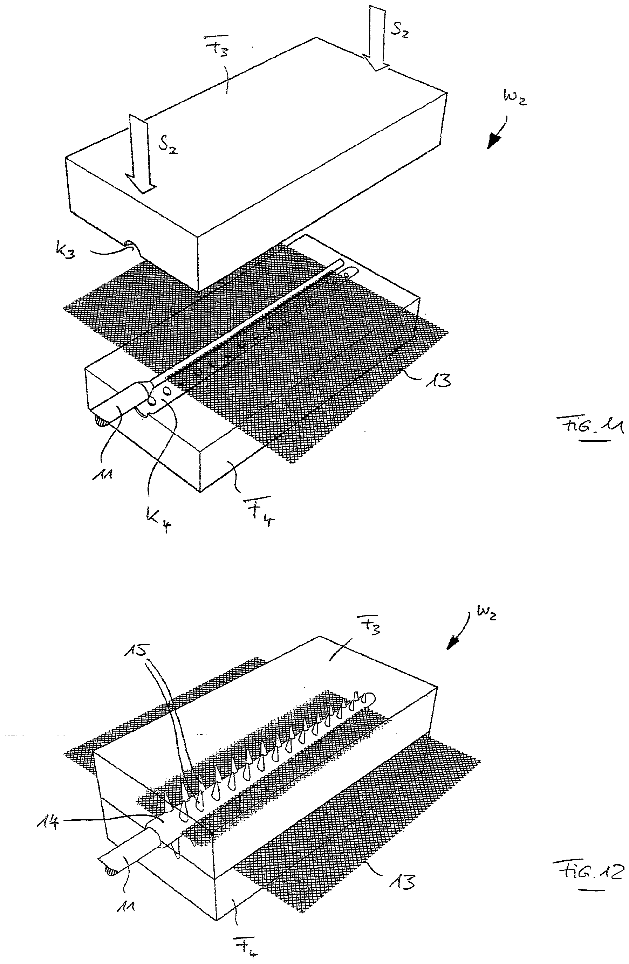

Vorzugsweise wird an den Interdentalreiniger 10 eine zweite Kunststoffkomponente angespritzt. Zu diesem Zweck ist gemäß Fig. 11 ein zweites Spritzgusswerkzeug W₂ vorgesehen, das eine obere Formhälfte F₃, die eine obere Kavität K₃ besitzt, und eine untere Formhälfte F₄ umfasst, die eine untere Kavität K₄ aufweist. Gemäß Fig. 11 wird in das zweite Spritzgusswerkzeug W₃ der vordere Abschnitt des vorgefertigten stabförmigen Trägers 11 zusammen mit dem eingebetteten Gewebeteil 13 eingelegt, wobei das Gewebeteil 13 in der Trennebene zwischen den beiden Formhälften F₃ und F₄ bzw. der Kavitäten K₃ und K₄ angeordnet ist. Anschließend wird das zweite Spritzgusswerkzeug W₂ geschlossen, indem die obere Formhälfte F₃ auf die untere Formhälfte F₄ abgesenkt wird, wie es durch die Pfeil S₂ in Fig. 11 angedeutet ist.

Nach dem Schließen des zweiten Spritzgusswerkzeugs W₂, wie es in Fig. 12 dargestellt ist, wird in den von den Kavitäten K₃ und K₄ gebildeten Formhohlraum ein flüssiger weichelastischer Kunststoff, insbesondere ein thermo-plastisches Elastomer eingespritzt, so dass der in dem zweiten Spritzgusswerkzeug W₂ liegende Abschnitt des Trägers 11 mit dem hülsenförmigen Überzug 14 versehen wird, der auf seiner Außenseite die radial nach außen hervor-stehenden Finger 15 trägt. Darüber hinaus wird durch den eingespritzten, den Überzug 14 bildenden Kunststoff erreicht, dass das Gewebeteil 13 auch in den Überzug 14 eingebettet und durch diesen gehalten wird.

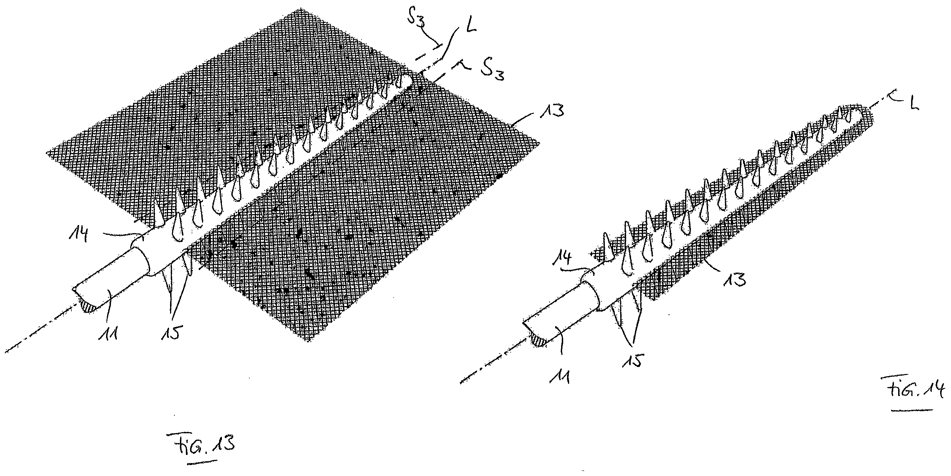

Nach dem Öffnen des zweiten Spritgusswerkzeugs W₂ werden die radial hervorstehenden Abschnitte des Gewebeteils 13 auf eine gewünschte Länge geschnitten, wie es in Fig. 13 durch die gestrichelt angedeuteten Schnittlinien S₃ dargestellt ist. Auf diese Weise ist der in Fig. 14 dargestellte Interdentalreiniger 10 gebildet. Dieser weist den auf dem vorderen Ende des stabförmigen Trägers 11 sitzenden, hülsenförmigen Überzug 14 mit radial hervorstehenden, angefoformten Fingern 15 und das zu entgegengesetzten Seiten radial hervorstehende Gewebeteil 13 auf, wobei das Gewebeteil 13 zwei seitliche, ebene, jeweils in Längs-richtung des Trägers 11 verlaufende flügelartige Vorsprünge bildet.

Alternativ kann das Gewebeteil auch im noch geschlossenen zweiten Spritzgusswerkzeug oder beim Öffnen des zweiten Spritzgusswerkzeugs oder bei geöffneten zweiten Spritzgusswerkzeug oder auch außerhalb des zweiten Spritzgusswerkzeugs in einer separaten Schneidestation geschnitten werden.

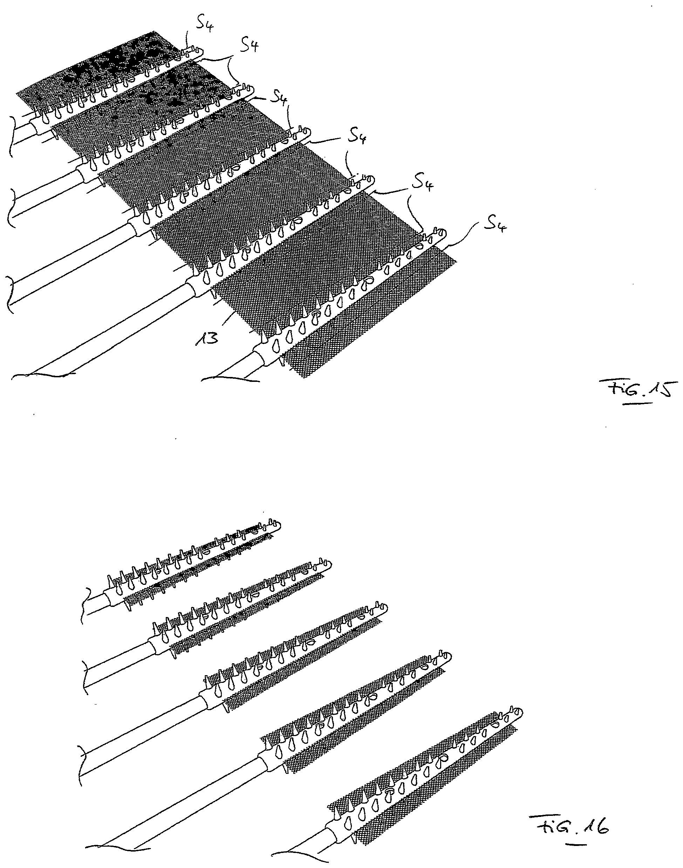

Fig 15 zeigt die Möglichkeit, mehrere Interdentalreiniger des genannten Aufbaus gleichzeitig in einfacher Weise herzustellen. Dazu werden die entsprechenden Spritzgusswerkzeuge mit mehreren auf Abstand nebeneinander angeordneten Kavitäten versehen, die jeweils der Herstellung eines Interdentalreinigers in genannter Weise dienen. In alle Kavitäten wird ein gemeinsames, streifenförmiges Gewebeteil 13eingelegt, so dass nach dem Öffnen des zweiten Spritzgusswerkzeugs ein Set von mehreren (hier: 5) Interdentalreinigern vorgesehen ist, die parallel auf Abstand nebeneinander angeordnet und zumindest über das gemeinsame, streifenförmige Gewebeteil 14 miteinander verbunden sind. In einem nachfolgenden Verfahrensschritt können die Gewebeteile der einzelnen Interdentalreiniger entlang von Schnittlinien S₄ auf ein gewünschtes Maß geschnitten werden, wodurch die Interdentalreiniger voneinander freikommen, wie es in Fig. 16 dargestellt ist und soweit sie nicht an ihrem hinteren, nicht dargestellten Ende miteinander verbunden sind.

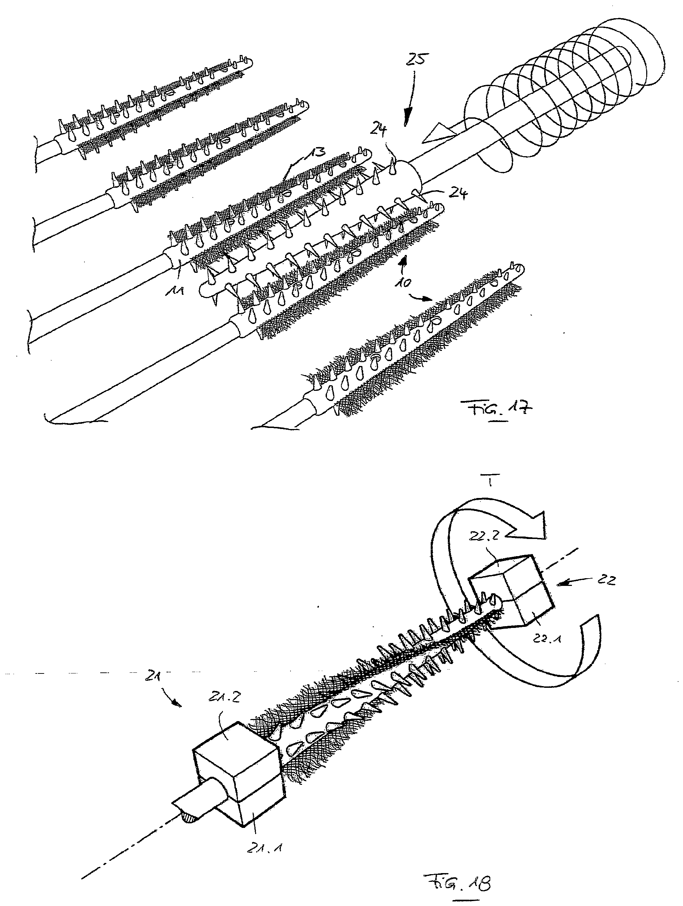

Fig. 17 zeigt einen weiteren möglichen Bearbeitungsschritt, mittels dessen die radial hervorstehenden Abschnitte des Gewebeteils 13 aufgetrennt bzw. gespleißt werden. Zu diesem Zweck ist ein drehangetriebenes Schlagwerkzeug 25 vorgesehen, das Schneidfinger 24 besitzt, mit denen die hervorstehenden Abschnitte der Gewebeteile aufgeschlagen und in Einzelfäden aufgeteilt werden können, die in ungeordneter Ausrichtung angeordnet sind, wie es insbesondere in Fig. 17 bei dem dortigen unteren Interdentalreiniger ersichtlich ist.

Fig. 18 zeigt einen weiteren möglichen Bearbeitungsschritt des Interdentalreinigers, wobei dieser um seine Längsachse L unter Bildung einer bleibenden Torsionsverformung tordiert wird. Dazu wird der Interdentalreiniger 10 in axial beabstandeten Abschnitten in eine erste Haltevor-richtung 21 bzw. eine zweite Haltevorrichtung 22 einge-spannt. Die erste Haltevorrichtung 21 weist einen unteren Klemmbacken 21.1 und einen oberen Klemmbacken 21.2 auf, die den Interdentalreiniger am hinteren, dem Griffteil zuge-wandten Ende des Überzugs 14 einspannen können. Die zweite Haltevorrichtung 22 weist einen unter Klemmbacken 22.1 und einen oberen Klemmbacken 22.2 auf, die den Interdental-reiniger am vorderen, dem Griffteil abgewandten Ende des Überzugs 14 einspannen. Wie Fig. 18 zeigt, wird die vordere zweite Haltevorrichtung 22 um die Längsachse L des Interdentalreinigers 10 bzw. des stabförmigen Trägers 11 gedreht, wie es durch den Pfeil T angedeutet ist. Dies führt dazu, dass der zwischen den beiden Haltevorrichtungen 21 und 22 befindliche Bereich des Interdentalreinigers 10, d.h. der dortige Abschnitt des Trägers 11, der Überzug 14 mit den Fingern 15 und dem Gewebeteil 13 um die Längsachse L des Trägers 11 tordiert werden, so dass sie eine plastische Verformung erfahren. Nach dem Öffnen und Ent-fernen der beiden Haltevorrichtungen 21 und 22 ist der Interdentalreiniger 10 so tordiert, dass die Finger 15 des Überzugs 14 und insbesondere die radial hervorstehenden Abschnitte des Gewebeteils 13 wendelartig um den Träger 11 herum verlaufen.

Obwohl in Fig. 18 ein Interdentalreiniger dargestellt ist, bei dem die radial hervorstehenden Abschnitte des Gewebeteils gespleißt sind, kann in gleichartiger Weise auch ein Interdentalreiniger tordiert werden, bei dem die radial hervorstehenden Abschnitte des Gewebeteils nicht gespleißt sind.

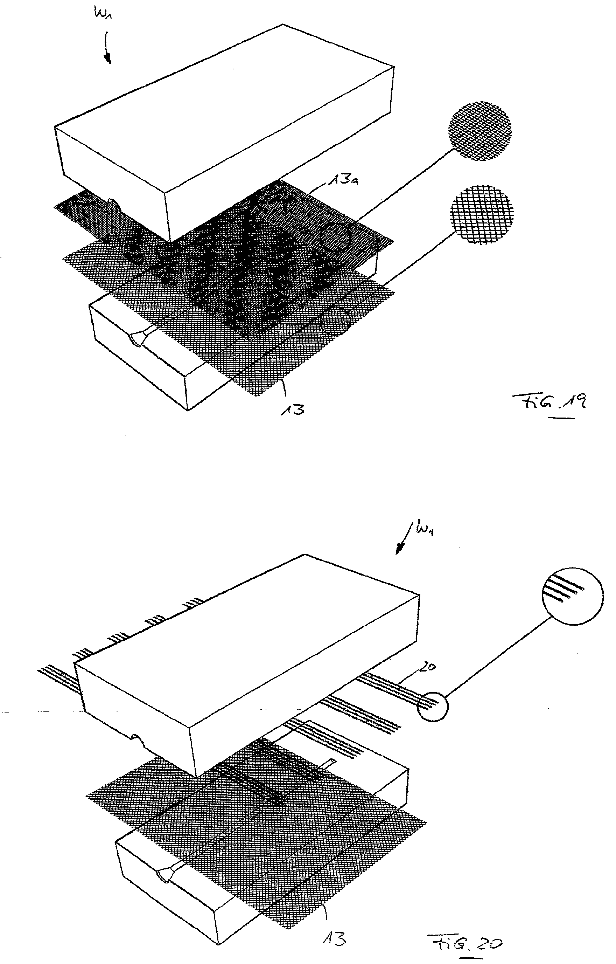

Fig. 19 zeigt eine Fig. 3 entsprechende Darstellung eines geöffneten ersten Spritzgusswerkzeugs W₁, bei dem zusätzlich zu dem bisher eingelegten Gewebeteil 13 ein weiteres Gewebeteil 13a eingelegt wird, wobei die beiden Gewebeteile 13, 13a vorzugsweise unmittelbar übereinander liegen. Wie in Fig. 19 angedeutet ist, besitzen die beiden Gewebeteile 13 und 13a eine unterschiedliche Struktur, eine unterschiedliche Farbenorientierung und eine unterschiedliche Maschenweite. Durch Auswahl der entsprechenden Gewebeteile kann die Reinigungswirkung des Interdentalreinigers an gewünschte Anforderungen angepasst werden.

Fig. 20 zeigt eine weitere Abwandlung des erfindungsgemäßen Verfahrens, wobei hier vorgesehen ist, zusätzlich zu dem Gewebeteil 13 mehrere Einzelborsten in das erste Spritzgusswerkzeug W₁ einzulegen. Im dargestellten Ausführungsbeispiel sind die Einzelborsten 20 zu Gruppen von jeweils vier Einzelborsten zusammengefasst, wobei die Einzelborsten 20 auf das Gewebeteil 13 aufgelegt oder unter diesem angeordnet werden und sich senkrecht zur Längserstreckung der Kavitäten K₁ und K₂ und somit beim fertigen Interdentalreiniger senkrecht zur Längsachse L des Trägers 11 erstrecken.

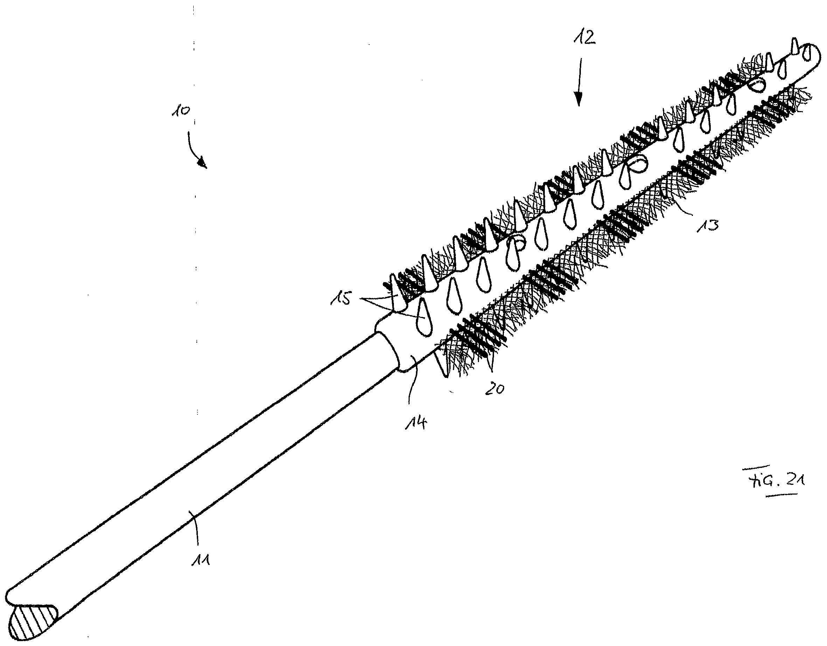

Fig. 21 zeigt eine Ansicht eines entsprechend hergestellten Interdentalreinigers. Dieser besitzt radial vom Träger 11 bzw. vom Überzug 14 hervorstehende Abschnitte des Gewebeteils 13, die gespleißt wurden, jedoch auch nicht-gespleißt sein können. Zusätzlich ragen von dem Träger 11 bzw. dem Überzug 14 die Einzelborsten 20 radial hervor, wobei die Kraglänge der Borsten etwa der auskragenden Länge des Gewebeteils 13 entspricht. Der in Fig. 21 dargestellte Interdentalreiniger kann einem nachfolgenden Schritt in nicht dargestellter Weise um seine Längsachse zur Erzielung einer bleibenden Torsionsverformung tordiert werden.

## Patentansprüche

1. Interdentalreiniger mit einem stabförmigen Träger (11) aus Kunststoff, der in einem axialen Endbereich eine Reinigungseinrichtung (12) aufweist, wobei die Reinigungseinrichtung (12) zumindest ein sich in Richtung einer Längsachse (L) des Trägers (11) ersteckendes Gewebeteil (13) umfasst, das sich kreuzende Fadensysteme mit Kettfäden (16) und Schussfäden (17) aufweist, wobei das Gewebeteil (13) mit dem Träger (11) verbunden ist und radial von diesem hervorsteht und wobei Kettfäden (16) und Schussfäden (17) den stabförmigen Träger (11) durchdringen, **dadurch gekennzeichnet, dass** die Kettfäden (16) und die Schussfäden (17) unter einem Winkel im Bereich von 20° bis 70° zur Längsachse (L) des stabförmigen Trägers (11) verlaufen.

2. Interdentalreiniger nach Anspruch 1, **dadurch gekennzeichnet, dass** die Kettfäden (16) und die Schussfäden (17) unter einem Winkel von 45° ± 10° zur Längsachse (L) des stabförmigen Trägers (11) verlaufen.

3. Interdentalreiniger nach Anspruch 1 oder 2, **dadurch gekennzeichnet, dass** das Gewebeteil (13) eine Netzstruktur besitzt.

4. Interdentalreiniger nach einem der Ansprüche 1 bis 3, **dadurch gekennzeichnet, dass** das Gewebeteil (13) den Träger (11) radial durchdringt und auf entgegengesetzten Seiten aus diesem hervorsteht.

5. Interdentalreiniger nach einem der Ansprüche 1 bis 4, **dadurch gekennzeichnet, dass** das Gewebeteil (13) den stabförmigen Träger (11) an dessen vorderem Ende axial überragt.

6. Interdentalreiniger nach einem der Ansprüche 1 bis 5, **dadurch gekennzeichnet, dass** die Reinigungseinrichtung (12) zusätzlich einen aus einem weich-elastischen Kunststoff bestehenden Überzug (14) des Trägers umfasst und dass auf der Außenseite des Überzugs (14) eine Strukturierung (19) ausgebildet ist.

7. Interdentalreiniger nach Anspruch 6, **dadurch gekennzeichnet, dass** die Strukturierung (19) mehrere mit radialer Komponente vom Überzug (14) hervorstehende Finger (15) aufweist, die aus dem gleichen Material wie der Überzug (14) bestehen und einstückig mit diesem verbunden sind.

8. Interdentalreiniger nach Anspruch 6 oder 7, **dadurch gekennzeichnet, dass** das Gewebeteil (13) den Überzug (14) durchdringt.

9. Interdentalreiniger nach einem der Ansprüche 6 bis 8, **dadurch gekennzeichnet, dass** das Gewebeteil (13) über die Finger (15) radial hervorsteht.

10. Interdentalreiniger nach einem der Ansprüche 1 bis 9, **dadurch gekennzeichnet, dass** mehrere Gewebeteile (13, 13a) übereinanderliegend in den stabförmigen Träger (11) eingebettet sind.

11. Interdentalreiniger nach Anspruch 10, **dadurch gekennzeichnet, dass** die Gewebeteile (13, 13a) eine unterschiedliche Struktur und/oder eine unter-schiedliche Stärke und/oder eine unterschiedliche Fadenorientierung und/oder eine unterschiedliche Maschenweite aufweisen.

12. Interdentalreiniger nach einem der Ansprüche 1 bis 11, **dadurch gekennzeichnet, dass** die Reinigungseinrichtung (12) zusätzlich einen Borstenbesatz mit mehreren mit radialer Komponente vom Träger (11) hervorstehenden Borstenbündeln und/oder Einzelborsten (20) aufweist.

13. Interdentalreiniger nach Anspruch 12, **dadurch gekennzeichnet, dass** zumindest einige der Borstenbündel und/oder Einzelborsten (20) den Träger (11) radial durchdringen und auf entgegengesetzten Seiten aus diesem hervorstehen.

14. Interdentalreiniger nach einem der Ansprüche 1 bis 13, **dadurch gekennzeichnet, dass** die radial vom Träger (11) hervorstehenden Abschnitte des Gewebeteils (13) zumindest abschnittsweise gespleißt sind.

15. Verfahren zur Herstellung eines Interdentalreinigers, wobei zumindest ein Gewebeteil (13), das sich kreuzende Fadensysteme mit Kettfäden (16) und Schussfäden (17) aufweist, in einem Spritzgusswerkzeug (W₁) unter Bildung eines stabförmigen Trägers (11) so mit Kunst-stoff umspritzt wird, dass das Gewebeteil (13) den stabförmigen Träger (11) durchdringt und radial von diesem hervorsteht, wobei die die Kettfäden (16) und die Schussfäden (17) unter einem Winkel von 20° bis 70° zur Längsachse (L) des stabförmigen Trägers (11) angeordnet werden.

## Claims

1. Interdental cleaner with a rod-shaped support (11) made of plastic, having a cleaning device (12) in an axial end region, wherein the cleaning device (12) comprises at least one fabric piece (13) extending in direction of a longitudinal axis (L) of the carrier (11) and having intersecting thread systems with warp threads (16) and weft threads (17), wherein the fabric piece (13) is connected with the support (11) and projects radially from the support (11), and wherein the warp threads (16) and the weft threads (17) penetrate through the rod-shaped carrier (11), **characterized in that** the warp threads (16) and the weft threads (17) extend at an angle in the range of 20 ° to 70 ° to the longitudinal axis (L) of the rod-shaped carrier (11),

2. Interdental cleaner according to claim 1, **characterized in that** the warp threads (16) and the weft threads (17) extend at an angle of 45 ° ± 10 ° to the longitudinal axis (L) of the rod-shaped carrier (11).

3. Interdental cleaner according to claim 1 or 2, **characterized in that** the fabric piece (13) has a network structure.

4. Interdental cleaner according to one of claims 1 to 3, **characterized in that** the fabric piece (13) penetrates radially the support (11) and protrudes on opposite sides from this.

5. Interdental cleaner according to one of claims 1 to 4, **characterized in that** the fabric piece (13) projects axially beyond the rod-shaped carrier (11) at its front end.

6. Interdental cleaner according to one of claims 1 to 5, **characterized in that** the cleaning device (12) additionally comprises a soft-elastic plastic coating (14) of the carrier, and **in that** on the outside of the coating (14) a structuring (19) is provided.

7. Interdental cleaner according to claim 6, **characterized in that** the structuring (19) has a plurality of protruding fingers (15) extending with a radial component from the coating (14), which consist of the same material as the coating (14) and are integrally connected thereto.

8. Interdental cleaner according to claim 6 or 7, **characterized in that** the fabric piece (13) penetrates the coating (14).

9. Interdental cleaner according to one of claims 6 to 8, **characterized in that** the fabric piece (13) on the fingers (15) protrude radially.

10. Interdental cleaner according to one of claims 1 to 9, **characterized in that** a plurality of fabric pieces (13, 13a) are embedded one above the other in the rod-shaped carrier (11)

11. Interdental cleaner according to claim 10, **characterized in that** the fabric pieces (13, 13a) have a different structure and/or a different thickness and/or a different Yarn orientation and/or a different mesh

12. Interdental cleaner according to one of claims 1 to 11, **characterized in that** the cleaning device (12) additionally comprises a set of bristles with a plurality of bristle bundles and/or individual bristles (20) extending from the carrier (11) with a radial component.

13. Interdental cleaner according to claim 12, **characterized in that** at least some of the bristle bundles and/or individual bristles (20) penetrate through the carrier (11) radially and protrude on opposite sides from this.

14. Interdental cleaner according to one of claims 1 to 13, **characterized in that** portions of the fabric piece (13) extending radially from the carrier (11) are at least partially spliced.

15. A process for the preparation of a interdental cleaner, wherein at least one fabric piece (13) having a intersecting thread systems with warp threads (16) and weft yarns (17), is coated in an injection mold (Wi) with plastic by forming a rod-shaped carrier (11), so that the fabric piece (13) penetrates and protrudes radially from the rod-shaped carrier (11), wherein the warp yarns (16) and the weft threads (17) are arranged at an angle of 20 ° to 70 ° to the longitudinal axis (L) of the rod-shaped carrier (11).

## Revendications

1. Appareil de nettoyage interdentaire avec un support (11) en forme de tige en matière plastique comportant dans une région d'extrémité axiale un dispositif de nettoyage (12), le dispositif de nettoyage (12) comprenant au moins une partie en tissu (13) s'étendant en direction d'un axe longitudinal (L) du support (11) et comportant des systèmes de fils se croisant avec des fils de chaîne (16) et des fils de trame (17), la partie en tissu (13) étant reliée au support (11) et ressortant hors de celui-ci dans le plan radial et les fils de chaîne (16) et les fils de trame (17) traversant le support (11) en forme de tige, **caractérisé en ce que** les fils de chaîne (16) et les fils de trame (17) s'étendent selon un angle compris dans la plage de 20° à 70° par rapport à l'axe longitudinal (L) du support (11) en forme de tige.

2. Appareil de nettoyage interdentaire selon la revendication 1, **caractérisé en ce que** les fils de chaîne (16) et les fils de trame (17) s'étendent selon un angle de 45° ± 10° par rapport à l'axe longitudinal (L) du support (11) en forme de tige.

3. Appareil de nettoyage interdentaire selon la revendication 1 ou 2, **caractérisé en ce que** la partie en tissu (13) possède une structure réticulaire.

4. Appareil de nettoyage interdentaire selon l'une quelconque des revendications 1 à 3, **caractérisé en ce que** la partie en tissu (13) traverse le support (11) dans le plan radial et ressort hors de lui sur les côtés opposés.

5. Appareil de nettoyage interdentaire selon l'une quelconque des revendications 1 à 4, **caractérisé en ce que** la partie en tissu (13) dépasse du support (11) en forme de tige dans le plan axial au niveau de son extrémité avant.

6. Appareil de nettoyage interdentaire selon l'une quelconque des revendications 1 à 5, **caractérisé en ce que** le dispositif de nettoyage (12) comprend en outre un revêtement (14) du support composé d'un plastique élastique souple et qu'une structuration (19) est réalisée sur le côté extérieur du revêtement (14).

7. Appareil de nettoyage interdentaire selon la revendication 6, **caractérisé en ce que** la structuration (19) comporte plusieurs doigts (15) ressortant du revêtement (14) avec une composante radiale, les doigts étant faits à partir de la même matière que le revêtement (14) et étant reliés à lui d'un seul tenant.

8. Appareil de nettoyage interdentaire selon la revendication 6 ou 7, **caractérisé en ce que** la partie en tissu (13) traverse le revêtement (14).

9. Appareil de nettoyage interdentaire selon l'une quelconque des revendications 6 à 8, **caractérisé en ce que** la partie en tissu (13) ressort dans le plan radial au-delà des doigts (15).

10. Appareil de nettoyage interdentaire selon l'une quelconque des revendications 1 à 9, **caractérisé en ce que** plusieurs parties en tissu (13, 13a) sont encastrées les unes au-dessus des autres dans le support (11) en forme de tige.

11. Appareil de nettoyage interdentaire selon la revendication 10, **caractérisé en ce que** les parties en tissu (13, 13a) présentent une structure différente et/ou une épaisseur différente et/ou une orientation de fil différente et/ou une largeur de maille différente.

12. Appareil de nettoyage interdentaire selon l'une quelconque des revendications 1 à 11, **caractérisé en ce que** le dispositif de nettoyage (12) comporte en outre un garnissage de soies avec plusieurs paquets de soies et/ou soies individuelles (20) saillant hors du support (11) avec une composante radiale.

13. Appareil de nettoyage interdentaire selon la revendication 12, **caractérisé en ce qu'**au moins quelques-uns des paquets de soies et/ou quelques-unes des soies individuelles (20) traversent le support (11) dans le plan radial et ressortent hors de lui sur les côtés opposés.

14. Appareil de nettoyage interdentaire selon l'une quelconque des revendications 1 à 13, **caractérisé en ce que** les sections de la partie en tissu (13) saillant hors du support (11) dans le plan radial sont au moins en partie épissées.

15. Procédé de fabrication d'appareil de nettoyage interdentaire, au moins une partie en tissu (13) comportant des systèmes de fils se croisant avec des fils de chaîne (16) et des fils de trame (17) étant enrobée dans un outil de moulage par injection (W₁) pour former un support (11) en forme de tige en matière plastique de telle sorte que la partie en tissu (13) traverse le support (11) en forme de tige et ressorte hors de lui dans le plan radial, les fils de chaîne (16) et les fils de trame (17) étant disposés selon un angle de 20° à 70° par rapport à l'axe longitudinal (L) du support (11) en forme de tige.
